# EUROPEAN PATENT SPECIFICATION

(11) **EP 0 700 642 B1**
(45) Date of publication and mention of the grant of the patent: **15.05.2002**
(21) Application number: 95610047.3
(22) Date of filing: 06.09.1995
(51) Int. Cl.: A23L 1/10, A23L 1/182

(54) **Method and plant for the continuous boiling of rice**
Verfahren und Einrichtung zum kontinuierlichen Kochen von Reis
Méthode et installation pour la cuisson en continu du riz

(30) Priority: 07.09.1994 DK 103494
(43) Date of publication of application: 13.03.1996
(73) Proprietor: Danrice A/S, 5853 Oerbaek (DK)
(72) Inventor: Schroll, Gunner, DK-5750 Ringe (DK)
(74) Representative: Larsen, Hans Ole

(56) References cited:
- FR-A- 1 547 726
- FR-A- 2 416 676
- FR-A- 2 674 100
- US-A- 4 155 293
- US-A- 4 238 997
- US-A- 4 702 161
- US-A- 4 787 300

## Description

### Background of the invention

The invention relates to a method for the automatic and continuous boiling of rice, and comprising a soaking of the rice which is hereafter heated to boilling by means of hot water in the boiling zone of a blancher with a conveyor for the feeding of the rice to boiling zones, and subsequent cooling before possible salting, and also a plant for the execution of the method.

Boiled rice is used to a great extent as a semi-product for finished dishes such as mixed vegetables, paella, poultry dishes etc. The boiled rice is frozen and packed, after which it is transported to the places of use.

There are known methods and plants which can be used for such boiling.

EP patent application no. 371,324, US patent publication no. 4,873,917, and FR 1,547,726 disclose apparatuses for the continuous boiling of rice. However, these known apparatuses have a considerable water consumption and a correspondingly high consumption of energy. The water consumption is due to the continuous supply of fresh water for both the boiling and the cooling, and the energy consumption is due to the constant heating of this water in the soaking and the boiling zones. This also results in a correspondingly large amount of waste water and herewith problems with the cleaning and disposal of same.

US 4,702,161 discloses an apparatus for blanching and cooling vegetables which are transported on a conveyor belt. The apparatus utilizes the water in such a manner that the consumption of water and energy remains as low as possible. The apparatus does not disclose any soaking section, as a consequence of which it is not applicable to the boiling of rice, which soakes water prior to the boiling.

Furthermore, an apparatus for the boiling of vegetables by adding hot water in counterflow to the vegetables is known from FR 2,416,676. The apparatus known from this publication discloses a drum with internal vanes for conveying the vegetables in counterflow to the boiling water. Water and the supplied energy is hereby utilized in the best possible manner, but there will of course be a water loss since the water must be exchanged when it is no longer clean enough for the boiling.

However, none of these known apparatus is directly applicable to the boiling of rice.

### Advantages of the invention

According to the invention, by applying a method whereby the soaking takes place in water from the boiling zone, whereby there are means for the water used in the boiling zone of the blancher to be supplied to the soaker and to the rice in a continuous counterflow supplied by water from the boiling zone, and subsequent cooling before possible salting, and whereby the water is removed from the soaking zone when its content of dry matter exceeds an amount of preferably 8% of dry matter, and, a remarkably economical boiling of rice is obtained because of the low consumption of water which is obtained by utilizing the soaking water to the maximum, and by changing it only when the content of dry matter exceeds the level at which rice can no longer absorb water, and supplementing with hot water from the boiling zone.

The water containing dry matter can be used as an advantageous pig fodder.

As disclosed in claim 2, by configuring the plant for the execution of the method with a rotating drum with internal vanes for the feeding of the rice, and leading the soaked and hot rice directly out on a conveyor in the blancher, the rice can remain on the conveyor, and by pumping the water out of the tank or a vessel connected therewith when the content of dry matter gets too high, the water will be utilized to the optimum degree and the consumption of water and the energy will therefore be the lowest possible.

As disclosed in claim 3, by leading the hot soaking water from jets and spraying the grains of rice along the inside of the drum and letting them drip the water when they pass a collection tank in the bottom, the most economical and uniform soaking of the rice is achieved.

As disclosed in claim 4, by configuring one of the cooling zones as an air-cooled zone by sucking air up through the conveyor and the rice layer, a very effective cooling is achieved over a relatively short length of conveyor, which makes it possible for the plant to be of compact construction.

As disclosed in claim 5, to effect the salting of the rice by using a concentrated salt solution in a closed circuit, said solution being sprayed out over the rice layer and being sifted through same and thereafter collected and recirculated, a reliable control of the salt content and a uniformity in the finished rice is achieved.

As disclosed in claim 6, by allowing the rice to drain after being salted, its surface becomes suitable dry so that there is no tendency for the rice grains to stick together during the subsequent freezing and use.

Finally, it is expedient, as disclosed in claim 7, to lead the finish-boiled rice to a vibrating table where possible clumps are broken up, the result being a uniform and homogenous flow of rice which is suitable for freezing.

### The drawing

An example embodiment of a plant for the execution of the method according to the invention wil now be described in more detail with reference to the drawing, where
- fig. 1: shows a principle drawing of a plant seen from above,
- fig. 2: shows a cross-section of the soaker seen in the direction II-II in fig. 1,
- fig. 3: shows a corresponding section through the blancher seen in the direction III-III in fig. 1, and
- fig. 4: shows a cross-section of the salting zone.

### Description of the example embodiment

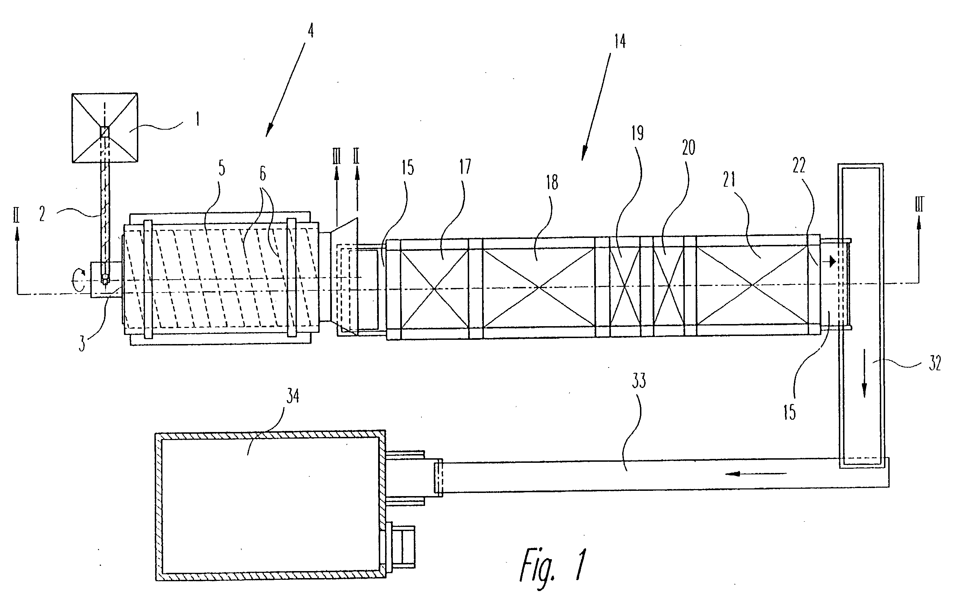

An example of an embodiment of a plant for the automatic and continuous boiling of rice and herewith related grain is shown in fig. 1-3.

The plant comprises a funnel 1 over which there can be suspended a not-shown sack of rice. The rice is fed from the bottom of the funnel 1 up to the soaker 4 by means of a worm conveyor 2 which opens out in an inlet 3 to the soaker.

This is provided with a drum 5 which is configured as a shroud having an inner side on which there are secured vanes 6 which extend in a spiral manner from the inlet end to the outlet end. By letting the pitch of the vanes extend in the direction of rotation of the drum, the rice will be fed forwards in the drum when this rotates.

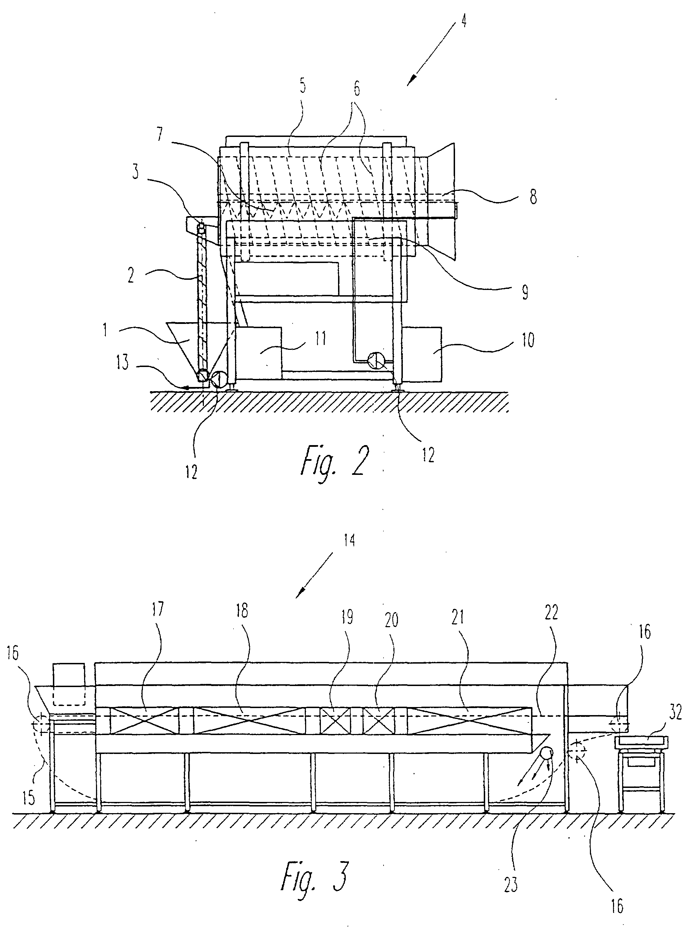

As shown in fig. 2, soaking water is now applied to the rice in the drum 5, this water being stored in a tank 10 which is supplied with water from the blancher 14, which will be described later.

A pump 12 feeds the hot water to a nozzle pipe 8 which extends inside the drum 5. Distributed along the length of the pipe there are nozzles which spray water 7 on to the rice in the drum.

The drum 5 is constructed in such a manner that during its rotation the rice is moved in the direction of production, which in the drawing is towards the right, while the water 7 flows in the opposite direction in the whorl between the vanes 6. In the bottom of the drum there is arranged a not- shown sieve through which the water can be led out and thereafter fed into the preceding whorl in the direction of production. The water is hereby moved in counterflow to the rice.

The water is finally discharged into a second tank 11. This is connected to the first tank 10 so that a supply of water can be effected from the second tank 11 in the event of the supply of water from the boiling zone in the blancher 14 not being sufficient.

When the content of solid matter in the water 7 in the tank 11 exceeds the maximum from which the rice can absorb water, which will be about 8% solid matter, a given amount of waste water 13 is pumped out to a not-shown collection tank or the like. Here it should be noted that the content of solid matter in this waste water makes it suitable, for example, for pig-food.

When the rice is being fed forwards, in the last whorls it will be conveyed without nozzle water 7, whereby it becomes suitable for the application of a possible dye solution such as a turmeric powder solution. The rotations of the drum 5 ensure that the dye is mixed evenly with the rice and is distributed uniformly on the grains.

Hereafter, the soaked and possibly dyed rice is fed directly on to a conveyor 15 in a blancher 14 as shown in figs. 1 and 3.

The blancher 14 comprises a first boiling zone 17, a second boiling zone 18, a first cooling zone 19, a second cooling zone 20, a third cooling zone 21 with salting zone and draining zone 22, all of which zones are past by the conveyor 15 before it passes over a turning roller 16 and extends forwards under the plant to the inlet end of the blancher.

The first boiling zone 17 is provided with an overflow for the boiling water to the tank 10, see fig. 2, so that it can be continuously replaced.

Hereafter, the rice is conveyed to the next boiling zone 18, after which follows the first cooling zone 19. This zone 19 is water-cooled, the result being that the water is preheated before it is led to the second boiling zone 18.

In the subsequent cooling zone 20, an air-cooling is effected by means of a fan which sucks out the air in the space over the rice on the conveyor 15.

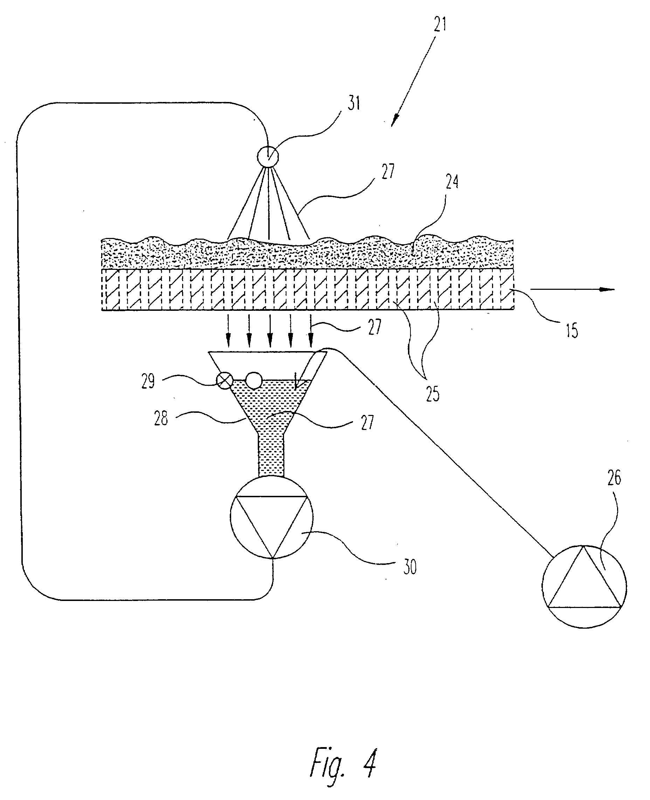

This conveyor is preferably a chain-link conveyor which, as indicated in fig. 4, has through-going holes 25, so that air under the conveyor 15 will be sucked through the rice layer 24. The rice is hereby effectively cooled in the shortest possible time and herewith within an appropriately short conveyor movement.

After this follows the final, third water-cooled zone 21, where a simultaneous salting can be carried out by means of the equipment shown in fig. 4.

This comprises the supply of a concentrated salt solution via a pump 26 to a vessel 28 to which there is also supplied fresh water via a float valve 29. The salt solution 27 is pumped from this vessel 28 by means of a pump 30 to a nozzle 31, from where it is sprayed out over the rice 24. During the passage of the solution through the rice layer, the rice will absorb the applied amount of salt.

If, for example, a 1% salting of the finish-boiled rice is desired, and 1 ton of rice per hour passes through the salting zone, a salt solution corresponding to 10 kg. of salt per hour must be applied. Since the salt solution is applied only to the rice, this will give the desired salting of 1%. It can hereby be ensured that a given degree of salting will be uniform.

The salt solution is recirculated and freshwater only is supplied when the level falls in the vessel 28, so that the concentration increases. There is hereby ensured a suitably uniform salt solution 27 for spraying out over the rice.

After the salting there extends a dripping-off zone 22 so that the surface water can drip off the rice which will then absorb the remaining surface water.

Finally, the finish-boiled, possibly dyed and salted rice is deposited on a transversely-extending vibration belt 32 where possible clumps are comminuted to loose rice.

From this belt 32, the rice is led to a conveyor 33 where it is given sufficient time, holding time, to absorb all the surface water, so that it is completely dry for the freezing. This can be effected in a commonly-known freezing plant 34, after which the frozen rice can be packed in a commonly-known manner.

### Description of the method

The dosing of the rice to the soaker 4 can take place by adjustment of the speed of rotation of the worm conveyor 2. Since this is steplessly variable, it can be set to provide a given dose.

The soaking takes place by giving the rice a retention time in the drum 5 of about 45 minutes. The pumping out of the water from the collection vessel 11 is effected when a given level in the tank is reached. The actual pumping out takes place at a predetermined volume, so that a given amount of the water containing the most solid matter is pumped out.

The water, which is fed to the blancher 14, is first led to a nozzle 23, see fig. 3, as rinsing water for the conveyor 15. It is hereby ensured that the conveyor belt is clean when it reaches the feeding end of the blancher 14.

The water is then led to the first cooling zone 19 where it is heated to 75-80°C by the hot rice before being fed into the boiling zones 17 and 18, where thermal energy is supplied so that the water after the first boiling zone is around 95°C.

The water has this temperature when it is fed to the soaker 4, see fig. 2, where before the water absorption a heating of the rice to around 60°C takes place when the rice leaves the soaker.

During the operation of the plant, it is important to dimension and set the feeding rate of the conveyor in the individual zones so that the rice is boiled as slowly as possible. The individual grains of rice are hereby given a uniform water content.

The colouring takes place at a time when the rice is partly saturated with water in the soaker, which ensures a suitable absorption of colouring matter by the outside of the rice grains. The colouring is therafter boiled into the rice.

By allowing the rice to absorb and preheat the used water from the blancher, and to take up as much solid matter as possible from the water, a minimum loss of energy and solid matter is achieved.

Finally, it is advantageous that the rice becomes saturated with water at as late a time as possible, i.e. when the rice absorbs the last water in the dripping-off zone 22, whereby the plant can be dimensioned as compact and herewith as rationally as possible.

## Claims

1. Method for the automatic and continuous boiling of rice, and comprising a soaking of the rice, which is hereafter heated to boiling by means of hot water in the boiling zone of a blancher with a conveyor for the feeding of the rice to boiling zones, and subsequent cooling before possible salting, **characterized in that** the soaking takes place in water from the boiling zone, that there are means for the water used in the boiling zone of the blancher to be supplied to the soaker and to the rice in a continuous counterflow supplied by water from the boiling zone, and that the water is removed from the soaking zone when its content of dry matter exceeds an amount of preferably 8% of dry matter.

2. Plant for the execution of the method according to claim 1, **characterized in that** it comprises a soaker (4) in the form of a rotatable drum (5) with internal vanes (6) which extend spirally for the feeding of the rice through the drum (5) in hot water (7), and with arrangements for the feeding of water from the boiling zone of a blancher (14) in counterflow to the rice, and with means for pumping the water (7) out of a tank (9) for collection of the water (7) when the content of dry matter exceeds the determined amount which the rice is able to absorb.

3. Plant according to claim 2, **characterized in that** it comprises nozzles (8) extending inside the drum (5) for the supply of hot water (7) for spraying on the rice between the vanes (6), the tank (9) for the collection of water (7), the drum (5) with its lowermost part submerged in the water (7), and arrangements for the recirculation of the water (7) to the nozzles (8).

4. Plant according to claims 2 and 3, **characterized in that** the air-cooled zone (20) in the blancher (14) comprises an underpressure zone over the conveyor (15), said conveyor being provided with through-going channels or holes (25) so that the air under the conveyor (15) can be sucked via the holes (25) through the layer of rice (24).

5. Plant according to claims 2-4, **characterized in that** the salting zone (21) comprises a nozzle (31) which is placed over the conveyor (15), **in that** to said nozzle (31) there is pumped (30) a salt solution (27) from a vessel (28) which is placed under the conveyor (15) for the collection of the salt solution (27), said vessel (28) being provided with a float valve (29) for the supply of water and with a supply (26) of a concentrated salt solution.

6. Plant according to claims 2-5, **characterized in that** after the salting zone (21) there is arranged a dripping-off zone (22).

7. Plant according to claims 2-6, **characterized in that** the conveyor (15) opens out over a vibrating conveyor (32) for the separation of the rice (24) before it is fed (33) to the freezing plant (34).

## Patentansprüche

1. Verfahren zum automatischen und kontinuierlichen Reiskochen, umfassend ein Einweichen des Reises, der danach zum Kochen mittels heißen Wassers in der Kochzone einer Brüheinrichtung mit einer Förderanlage zum Zuführen des Reis zu Kochzonen aufgeheizt wird und ein darauffolgendes Kühlen vor einem möglichen Salzen, **dadurch gekennzeichnet, dass** das Einweichen in Wasser aus der Kochzone stattfindet, dass dort Mittel zum Zuführen von in der Kochzone der Brüheinrichtung verwendeten Wassers zu dem Einweicher und zu dem Reis in einem kontinuierlichen Gegenstrom, der durch Wasser aus der Kochzone versorgt wird, vorhanden sind und dass das Wasser von der Einweichzone entnommen wird, wenn dessen Gehalt an Trockenmasse eine Menge von vorzugsweise 8% Feststoff übersteigt.

2. Anlage zur Durchführung des Verfahrens nach Anspruch 1, **dadurch gekennzeichnet, dass** es einen Einweicher (4) in Gestalt einer drehbaren Trommel (5) mit innen angeordneten Schaufeln (6) aufweist, die sich spiralförmig zum Fördern des Reises durch die Trommel (5) in heißem Wasser (7) erstrecken und mit Anordnungen zum Zuführen von Wasser aus der Kochzone einer Brüheinrichtung (14) im Gegenstrom zu dem Reis und mit Mitteln zum Auspumpen des Wassers (7) aus einem Tank (9), der zum Sammeln des Wassers (7) vorgesehen ist, wenn der Gehalt an Trockenmasse die vorbestimmte Menge überschreitet, die der Reis aufzunehmen in der Lage ist.

3. Anlage nach Anspruch 2, **dadurch gekennzeichnet, dass** sie Düsen (8), die sich innerhalb der Trommel (5) zum Zuführen heißen Wassers (7) zum Versprühen auf dem Reis zwischen den Schaufeln (6) erstrecken, den Tank (9) zum Sammeln des Wassers (7), die Trommel (5), mit ihrem untersten Teil in dem Wasser (7) eingetaucht und Anordnungen zur Rezirkulation des Wassers (7) zu den Düsen (8) aufweist.

4. Anlage nach den Ansprüchen 2 und 3, **dadurch gekennzeichnet, dass** die luftgekühlte Zone (20) in der Brüheinrichtung (14) eine Unterdruckzone oberhalb der Förderanlage (15) aufweist, wobei die Förderanlage mit durchgehenden Kanälen oder Löchern (25) versehen ist, so dass die Luft von unterhalb der Förderanlage (15) durch die Löcher (25) durch die Reisschicht (24) angesaugt werden kann.

5. Anlage nach den Ansprüchen 2 bis 4, **dadurch gekennzeichnet, dass** die Salzzone (21) eine Düse (31) aufweist, die oberhalb der Förderanlage (15) angeordnet ist, dass zu der Düse (31) eine Salzlösung (27) aus einem Kessel (28), der unterhalb der Förderanlage (15) zum Sammeln der Salzlösung (27) angeordnet ist, gepumpt (30) wird, wobei der Kessel (28) mit einem Schwimmerventil (29) für die Wasserzufuhr und mit einer Zufuhr (26) einer konzentrierten Salzlösung versehen ist.

6. Anlage nach den Ansprüchen 2 bis 5, **dadurch gekennzeichnet, dass** nach der Salzzone (21) eine Abtropfzone (22) angeordnet ist.

7. Anlage nach den Ansprüchen 2 bis 4, **dadurch gekennzeichnet, dass** die Förderanlage (15) über einer vibrierenden Förderanlage (32) zum Trennen des Reis (24), bevor dieser zu der Gefrieranlage (34) gefördert (33) wird, mündet.

## Revendications

1. Méthode pour la cuisson automatique et continue du riz, comprenant un trempage du riz qui est ensuite chauffé à ébullition au moyen d'eau chaude dans la zone d'ébullition d'un dispositif de blanchiment avec un convoyeur pour l'amenée du riz aux zones d'ébullition, puis un refroidissement avant salage possible, **caractérisée en ce que** le trempage a lieu dans de l'eau venant de la zone d'ébullition, **en ce qu'**il est prévu des moyens pour que l'eau utilisée dans la zone d'ébullition du dispositif de blanchiment soit envoyée au dispositif de trempage et au riz en un contre-courant continu alimenté par l'eau venant de la zone d'ébullition, et **en ce que** l'eau est évacuée de la zone de trempage lorsque sa teneur en matières sèches dépasse une valeur de préférence de 8% de matières sèches.

2. Installation pour la mise en oeuvre de la méthode selon la revendication 1, **caractérisée en ce qu'**elle comprend un dispositif de trempage (4) sous la forme d'un tambour rotatif (5) à ailettes intérieures (6) qui s'étendent hélicoïdalement pour faire avancer le riz à travers le tambour (5) dans de l'eau chaude (7), avec des moyens pour l'alimentation en eau à partir de la zone d'ébullition d'un dispositif de blanchiment (14) à contre-courant du riz, et des moyens de pompage de l'eau (7) à partir d'un réservoir (9) de collecte de l'eau (7) lorsque la teneur en matières sèches dépasse la quantité déterminée que le riz peut absorber.

3. installation selon la revendication 2, **caractérisée en ce qu'**elle comprend des buses (8) s'étendant à l'intérieur du tambour (5) pour la fourniture d'eau chaude (7) pulvérisée sur le riz entre les ailettes (8), le réservoir (9) de collecte d'eau (7), le tambour (5) dont la partie inférieure est immergés dans l'eau (7), et des dispositifs pour le recyclage de l'eau (7) vers les buses (8).

4. Installation selon les revendications 2 et 3, **caractérisée en ce que** la zone refroidie à l'air (20) dans le dispositif de blanchiment (14) comprend une zone en dépression au-dessus du convoyeur (16), le dit convoyeur comportant des canaux ou trous traversants (25) de sorts que l'air sous le convoyeur (15) peut être aspiré, via les trous (25), à travers la couche de riz (24).

5. Installation selon les revendications 2 à 4, **caractérisée en ce que** la zone de salage (21) comprend une buse (31) qui est placée au-dessus du convoyeur (15), **en ce qu'**une solution salée (27) est pompée (30) vers la dite buse (31) à partir d'une cuve (28) qui est placée sous le convoyeur (15) pour la collecte de la solution salée (27), la dite cuve (28) étant pourvue d'une soupape à flotteur (29) pour la fourniture d'eau, et d'une alimentation (26) en solution salée concentrée.

6. Installation salon les revendications 2 à 5, **caractérisée en ce que**, après la zone de salage (21), il est prévu une zone d'égouttage (22).

7. Installation selon les revendications 2 à 8, **caractérisée en ce que** le convoyeur (15) débouche au-dessus d'un convoyeur vibrant (32) pour la séparation du riz (24) avant son envoi (33) à l'installation de congélation (34).
